# EUROPEAN PATENT SPECIFICATION

(11) **EP 1 894 459 B1**
(45) Date of publication and mention of the grant of the patent: **02.05.2012**
(21) Application number: 07014133.8
(22) Date of filing: 19.07.2007
(51) Int. Cl.: A01D 34/416

(54) **A motor strimmer head affording wire loading without deassembly of the head**
Rasentrimmerkopf, der eine Drahtladung ohne Demontage des Kopfs ermöglicht
Tête de moteur autorisant le chargement de câble sans démontage de la tête

(30) Priority: 30.08.2006 IT RE20060098
(43) Date of publication of application: 05.03.2008
(73) Proprietor: Tecomec S.r.l., 42124 Reggio Emilia (IT)
(72) Inventor: Cigarini, Enrico, 42020 San Bartolomeo (RE) (IT)
(74) Representative: Gotra, Stefano

(56) References cited:
- EP-A- 0 784 919
- EP-A- 1 795 062
- WO-A-97/29627
- US-B1- 6 263 580

## Description

The invention relates, in a very general sense, to a strimmer head, in which it is not necessary to de-mount the head in order to recharge the wire.

As is known, strimmer tools are generally used for cutting excess vegetation, and weeds and so on, and are used in the field of gardening, in road maintenance and in agriculture and forestry.

Strimmers are essentially constituted by a motor, a transmission system and a rotating cutting tool, the tool being located at an end of a rod which can be manoeuvred by an operator.

The rotating tool is generally constituted by a substantially cylindrical head from which two ends of a nylon (or other suitable material) wire project.

In more detail, the head comprises a cylindrical casing internally of which the wire is wound; the ends of the wire project from two diametrically-opposite holes in the casing.

Due to the centrifugal force acting thereon, when the head is set in rotation the ends of the wire are arranged in radial position such as to act as cutting blades for the vegetation.

Known-type heads also include means for releasing portions of wound wire which exit during use of the strimmer, as the use of the tool in the above-described way causes wear on the ends of the wire.

The releasing of the successive portions of wire is done by causing the reel to rotate with respect to the casing.

After prolonged use of the strimmer, the problem of substituting the reel emerges, as the reel becomes almost completely worn by use; in the past this problem was overcome by manually winding the new wire onto the reel and remounting the replenished reel onto the head.

The winding of the reel is done by inserting up to half the length of the wire in a diameter hole in the reel, so that it projects from both sides of the reel, and rotating the reel to wind up the two halves of the full length of wire.

European patent EP 784 919 describes a strimmer head provided with a reel thanks to which the wire can be substituted without having to dismount the head and extract the reel from the casing.

In this invention, the head exhibits an internal reel which is substantially cylindrical and has three flanges defining the winding spaces of the two halves of the wire. The hub of the reel exhibits diametrically-opposite holes, which are arranged along an axis which intersects the rotation axis of the reel and which is inclined with respect thereto; all of this is done in such a way that a nylon wire can be inserted in the hub of the reel and successively wound onto the reel, with the two halves of the wire separated by the central flange.

A solution of this type, however, exhibits the drawback that in order to insert the wire into the hub of the reel it is necessary to provide a separate tool, for example a tubular wire-guide.

The wire-guide tool guides the ends of the wire through the two opposite holes in the casing and the openings on the reel hub.

The sprocket is rotated in order to align its diametral holes with the casing openings, the tubular wire-guide is inserted through the head, the wire is inserted into the wire guide and the wire guide is then removed.

Thereafter it is sufficient to rotate the reel with respect to the casing in order to wind the two ends of the wire about the hub.

Another example of a trimmer head, which forms part of the state of the art under Art. 54(3) EPC, can be seen in document EP 1 795 062.

This document shows a cutting head for a rotary trimmer having a control mechanism which is provided in the cutting head interacting between a follower member and a spool member so as to provide for one way rotational loading of flails into the cutting head. In another embodiment disclosed in this document, a cutting head allows the flails to be loaded by a ratcheting-type operation , i.e., a back and forth rotational movement, which is less fatiguing and even more efficient in its loading operation.

The aim of the present invention is to obviate the above-mentioned drawback, by realising a strimmer head to which a nylon wire can be associated without having the demount the head and without having to use a separate tool.

The aim is attained by a strimmer head comprising a casing provided on an external surface thereof with at least a pair of entry and exit holes for a cutting wire, and a reel, internal of the casing, which can be rotated with respect to the casing, where the reel includes a pair of flanges between which a wall is interposed in order to define, in cooperation with the flanges, annular spaces destined for winding the halves of the above-mentioned wire, and in which the reel exhibits an entry and exit channel for the wire, the ends of which channel are placed at and in proximity of the holes in the casing.

In a preferred embodiment of the invention, the channel is not parallel to an ideal axis which, on crossing the holes in the casing, also passes through the rotation axis of the reel, which coincides with the head axis.

In a preferred embodiment of the invention, the channel is curved and does not cross the hub of the reel.

Further characteristics and advantages of the invention will emerge from a reading of the following description, provided by way of non-limiting example with the aid of the figures of the accompanying tables of drawings, in which:

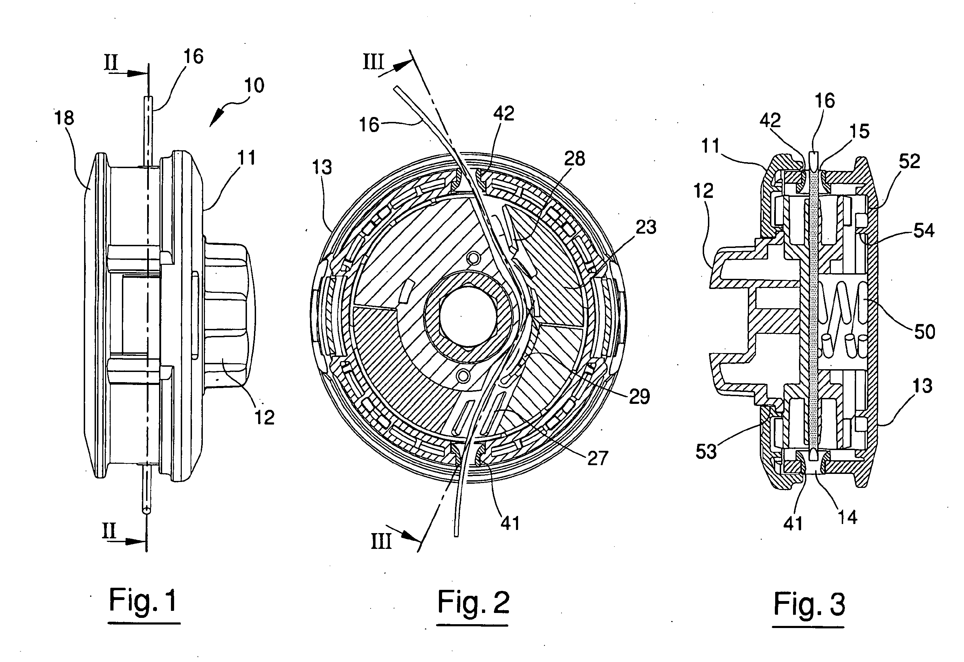

figure 1 is a lateral view of the strimmer head of the invention;
figure 2 is a section of the head according to plane II-II of figure 1;
figure 3 shows a section of the head of half-planes III-III of figure 2;
figure 4 is a plan view of a half of a reel belonging to the head of the invention;
figure 5 is a lateral view of the reel; and
figure 6 is a section of the reel according to plane VI-VI of figure 5 and an enlarged detail of the same reel.

With reference to the figures of the drawings, a strimmer head 10 and a reel 20 destined to be used in association with the head 10 are illustrated.

The head 10 is constituted by a cover 11 to which a handle 12 is associated, and by a cylindrical casing 13. The casing 13 is provided with holes 14 and 15 for entry and exit of a cutting wire 16.

A spring 50 can be interposed between the reel 20 and the casing 13.

Wire entry and exit bushes 41 and 42 are afforded at the above-mentioned holes 14 and 15.

The reel 20 includes a pair of flanges 21 and 22, between which a dividing wall 23 is interposed, the dividing wall 23 being circular crown-shaped. The flange 21, in cooperation with the wall 23, defines a first annular space 24 destined to wind the first half of the wire 16, while the flange 22, in cooperation with the wall 23, defines a second annular space 25 destined to wind the second half of the wire 16.

The flange 21 also bears a group of cogs 51 which enmesh with corresponding reliefs 53 located internally of the cover 11 and the flange 22 bears a group of cogs 52 which enmesh with corresponding reliefs 54 in the casing 13.

The guide and passage channel of the wire is afforded in the wall 23; the passage channel comprises two portions 27 and 28 for entry and exit of the wire 16.

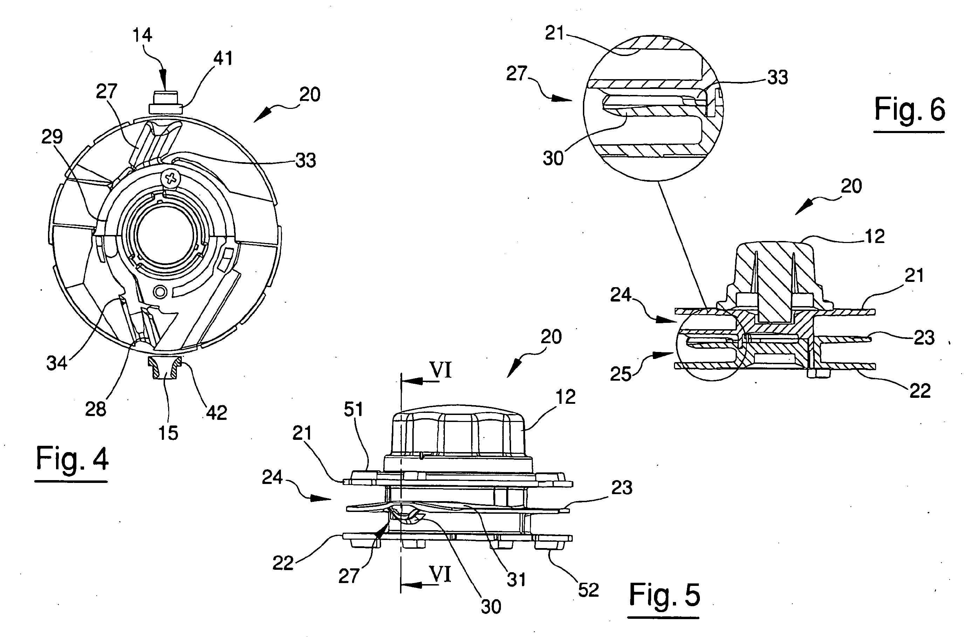

In particular, with reference to figure 5, the portion 27 is formed by a first flexible guide 30 and a raised portion 31 (or deformed portion), the portion 31 being raised or deformed in a direction towards the annular space 24, while the portion 28 is formed by a second flexible guide and a lowered portion (or deformed portion) which is raised or deformed towards the annular space 25.

The coupling between the flexible guides and the respective raised or lowered portions is projecting and elastic such as to leave open lateral spaces. Moreover each of the portions 27 and 28 exhibits a lateral opening 33 and 34 destined for the passage of the wire 16 during the stages of winding and unwinding thereof, as will be described in more detail herein below.

The portion 27 runs along a tract of the wall 23 in a direction not passing through the axis of rotation of the reel 20, but a direction which is substantially oblique with respect to the ideal axis which, crossing the holes 14 and 15 of the casing 13, also passes through the rotation axis of the reel 20 and, similarly, the portion 28 runs along a tract of the wall 23 in a direction which does not pass through the rotation axis of the reel 20, but which is substantially oblique with respect to the above-mentioned ideal axis.

In a preferred version of the invention, the portions 27 and 28 are not parallel to one another.

In a preferred version of the present invention, the portions 27 and 28 lie on a same plane.

A curved joining tract 29 is located between the portions 27 and 28.

The portions 27 and 28 are also unaligned not only with respect to the holes 14 and 15, but also with respect to the bushes 41 and 42 of the casing 13.

The strimmer head enables easy loading of the wire 16 without there being any need to demount the head and without having to use any special tools, such as for example a wire-guide.

In particular, the wire 16 is inserted internally of the entry hole 14 and at the bush 41, whereafter the wire 16 is run along the portion 27 of the entry channel, the connected joining tract 29 and the exit portion 28, in order to cause it to exit from the bush 42 and therefore from the exit hole 15.

The special conformation of the portions 27 and 28, as well as their geometric relation with the bushes 41 and 42, are such as to be able to exploit the elastic memory of the wire 16, facilitating insertion thereof without any need for specific tools.

At this point two tracts of wire 16 are defined in entry and exit, of about the same length and, by acting on the handle 12, the reel 20 is rotated with respect to the head 10.

By this effect, the wire 16 in the tracts thereof interested by the portions 27 and 28 is forced to exit laterally from the portions.

In particular, since the portions 27 and 28 each comprise, as mentioned, a projecting flexible guide and a deformed part going towards the respective annular space, these elastic characteristics are such that the wire 16, during the rotation of the reel 20, forces the parts, and in particular the flexible guides, to flex, thus more greatly opening the open lateral spaces present between each flexible guide and a respective deformed part.

This effect is amplified by the presence of the lateral openings 33 and 34 of the respective portions 27 and 28, and is such that the wire 16 can be wound respectively in the annular spaces 24 and 25 of the reel 20, resting on the hub thereof.

At the end of this operation, the wire 16 is almost completely wound on the reel 20, leaving the only the ends thereof to exit from the head 10, which ends will be used for cutting the vegetation.

The material the cutting wire 16 is made of can be nylon or another similar material.

## Claims

1. A strimmer head (10) comprising a cylindrical casing (13) provided with at least a diametrically-opposite pair of holes (14, 15), for entry and exit of a cutting wire (16), the holes (14, 15) being provided with wire entry and exit bushes (41, 42), and a reel (20) located internally of the casing (13), which reel (20) can be rotated with respect to the casing (13), wherein the reel (20) comprises a pair of flanges (21, 22) between which flanges (21, 22) a wall (23) is interposed in order to define, in cooperation with the flanges (21, 22), annular spaces (24, 25) each destined to wind a half of the wire (16), that the wall (23) exhibiting a wire guide channel comprising two portions (27, 28), being an entry portion and an exit portion for the wire (16), **characterised in that** said portions (27, 28) are arranged in directions which do not pass through an axis of rotation of the reel (20), said portions (27,28) being unaligned with respect to the holes (14,15) and with respect to the bushes (41, 42) of the casing (13).

2. The strimmer head (10) of claim 1, **characterised in that** the portions (27, 28) are arranged along non-parallel directions with respect to an axis which, crossing the holes (14, 15) of the casing (13), also passes through the axis of rotation of the reel (20).

3. The strimmer head (10) of claim 1 or 2, **characterised in that** the portions (27, 28) are not parallel to one another.

4. The strimmer head (10) of the preceding claims, **characterised in that** the two portions (27, 28) lie on a same plane.

5. The strimmer head (10) of the preceding claims, **characterised in that** the two portions (27, 28) are connected to one another by a curved tract (29).

6. The strimmer head (10) of claim 1, **characterised in that** a first portion (27) comprises a first projecting flexible guide (30) and a part (31) which is deformed in a direction towards the annular space (24), while a second portion (28) comprises a second projecting flexible guide and a part which is deformed in a direction towards the annular space (25).

7. The strimmer head (10) of claim 6, **characterised in that** the coupling between the flexible guides and the deformed parts is such as to leave lateral spaces open.

8. The strimmer head (10) of claim 6 or 7, **characterised in that** each of the portions (27, 28) exhibits a lateral opening (33, 34) which affords passage of the wire (16) during stages of winding and unwinding, in order to enable the wire to rest on a hub of the reel.

9. The strimmer head (10) of claim 1, **characterised in that** the flange (21) bears a group of cogs (51) which enmesh with corresponding reliefs (53) located internally of a cover (11) of the head (10) and the flange (22) bears a group of cogs (52) which enmesh with corresponding reliefs (54) located on the casing (13).

## Patentansprüche

1. Rasentrimmerkopf (10), umfassend ein zylinderförmiges Gehäuse (13), versehen mit mindestens einem diametral gegenüberliegenden Paar von Löchern (14, 15) für den Eingang und Ausgang eines Schneidedrahts (16), wobei die Löcher (14, 15) mit Drahteingangs- und -ausgangsbuchsen (41, 42) und einer Spule (20), innenliegend im Gehäuse (13) positioniert, ausgestattet sind und die Spule (20) zum Gehäuse (13) gedreht werden kann, wobei die Spule (20) ein Paar Flansche (21, 22) umfasst und zwischen diesen Flanschen (21, 22) eine Wand (23) eingesetzt ist, um zusammen mit den Flanschen (21, 22) ringförmige Bereiche (24, 25) zu definieren, die jeweils dazu bestimmt sind, eine Hälfte des Drahts (16) aufzuspulen, wobei die Wand (23) einen Drahtführungskanal aufweist, der zwei Abschnitte (27, 28) umfasst, bei denen es sich um einen Eingangsabschnitt und einen Ausgangsabschnitt für den Draht (16) handelt, **dadurch gekennzeichnet, dass** die genannten Abschnitte (27, 28) in Richtungen angeordnet sind, die nicht durch eine Rotationsachse der Spule (20) führen, wobei die genannten Abschnitte (27, 28) nicht zu den Löchern (14, 15) und zu den Buchsen (41, 42) des Gehäuses (13) ausgerichtet sind.

2. Rasentrimmerkopf (10) nach Anspruch 1, **dadurch gekennzeichnet, dass** die Abschnitte (27, 28) entlang nicht parallel verlaufender Richtungen zu einer Achse angeordnet sind, die die Löcher (14, 15) des Gehäuses (13) quert und auch durch die Rotationsachse der Spule (20) führt.

3. Rasentrimmerkopf (10) nach Anspruch 1 oder 2, **dadurch gekennzeichnet, dass** die Abschnitte (27, 28) nicht parallel zueinander angeordnet sind.

4. Rasentrimmerkopf (10) nach den vorhergehenden Ansprüchen, **dadurch gekennzeichnet, dass** die zwei Abschnitte (27, 28) auf einer selben Ebene liegen.

5. Rasentrimmerkopf (10) nach den vorhergehenden Ansprüchen, **dadurch gekennzeichnet, dass** die zwei Abschnitte (27, 28) durch ein gekrümmtes Teilstück (29) miteinander verbunden sind.

6. Rasentrimmerkopf (10) nach Anspruch 1, **dadurch gekennzeichnet, dass** ein erster Abschnitt (27) eine erste vorspringende flexible Führung (30) und einen Teil (31) umfasst, der in eine Richtung zum ringförmigen Bereich (24) verformt ist, während ein zweiter Abschnitt (28) eine zweite vorspringende flexible Führung und einen Teil umfasst, der in eine Richtung zum ringförmigen Bereich (25) verformt ist.

7. Rasentrimmerkopf (10) nach Anspruch 6, **dadurch gekennzeichnet, dass** die Kupplung zwischen den flexiblen Führungen und den verformten Teilen so ausgebildet ist, dass seitliche Bereiche offen bleiben.

8. Rasentrimmerkopf (10) nach Anspruch 6 oder 7, **dadurch gekennzeichnet, dass** die Abschnitte (27, 28) eine seitliche Öffnung (33, 34) aufweisen, die einen Durchgang des Drahts (16) während Phasen des Auf- und Abspulens bietet, um dem Draht zu ermöglichen, auf einer Nabe der Spule zu bleiben.

9. Rasentrimmerkopf (10) nach Anspruch 1, **dadurch gekennzeichnet, dass** der Flansch (21) eine Gruppe von Zähnen (51) trägt, die in entsprechende Aussparungen (53) eingreifen, die innenliegend in einer Abdeckung (11) des Kopfs (10) positioniert sind, wobei der Flansch (22) eine Gruppe von Zähnen (52) trägt, die in entsprechende Aussparungen (54), die auf dem Gehäuse (13) positioniert sind, eingreifen.

## Revendications

1. Tête de débroussailleuse (10) comprenant un boîtier cylindrique (13) et présentant au moins une paire d'orifices diamétralement opposés (14, 15) pour permettre l'entrée et la sortie d'un fil coupant (16), les orifices (14, 15) présentant des bagues d'entrée et de sortie de fil (41, 42) et une bobine (20) logée à l'intérieur du boîtier (13), ladite bobine (20) pouvant pivoter par rapport au boîtier (13), dans laquelle la bobine (20) comprend une paire de brides (21, 22) avec une paroi (23) interposée entre lesdites brides (21, 22), afin de définir, en coopération avec les brides (21, 22), des espaces annulaires (24, 25) chacun destiné à enrouler la moitié du fil (16), la paroi (23) présentant un canal de guidage de fil comprenant deux parties (27, 28), correspondant à une partie d'entrée et une partie de sortie pour le fil (16), **caractérisée en ce que** lesdites parties (27, 28) sont disposées dans des directions qui ne passent pas à travers un axe de rotation de la bobine (20), lesdites parties (27, 28) étant non alignées par rapport aux orifices (14, 15) et par rapport aux bagues (41, 42) du boîtier (13).

2. Tête de débroussailleuse (10) selon la revendication 1, **caractérisée en ce que** les parties (27, 28) sont disposées le long de directions non parallèles par rapport à un axe qui, traversant les orifices (14, 15) du boîtier (13), passe aussi à travers l'axe de rotation de la bobine (20).

3. Tête de débroussailleuse (10) selon les revendications 1 ou 2, **caractérisée en ce que** les parties (27, 28) ne sont pas parallèles entre elles.

4. Tête de débroussailleuse (10) selon les revendications précédentes, **caractérisée en ce que** les deux parties (27, 28) se situent sur un même plan.

5. Tête de débroussailleuse (10) selon les revendications précédentes, **caractérisée en ce que** les deux parties (27, 28) sont reliées l'une à l'autre par une section incurvée (29).

6. Tête de débroussailleuse (10) selon la revendication 1, **caractérisée en ce que** la première partie (27) comprend un premier guide en saillie flexible (30) et une partie (31) qui est déformée en direction de l'espace annulaire (24), tandis qu'une seconde partie (28) comprend un second guide en saillie flexible et une partie qui est déformée en direction de l'espace annulaire (25).

7. Tête de débroussailleuse (10) selon la revendication 6, **caractérisée en ce que** l'accouplement des guides flexibles et des parties déformées est réalisé de sorte à laisser les espaces latéraux ouverts.

8. Tête de débroussailleuse (10) selon les revendications 6 ou 7, **caractérisée en ce que** chacune des parties (27, 28) présente une ouverture latérale (33, 34) permettant le passage du fil (16) lors des étapes d'enroulement et de déroulement, afin de permettre au fil de s'appuyer sur le moyeu de la bobine.

9. Tête de débroussailleuse (10) selon la revendication 1, **caractérisée en ce que** la bride (21) porte un groupe de dents (51) qui s'engrène aux reliefs correspondants (53) situés à l'intérieur d'un couvercle (11) de la tête (10) et la bride (22) porte un groupe de dents (52) qui s'engrène aux reliefs correspondants (54) situés dans le boîtier (13).
